# EUROPÄISCHE PATENTSCHRIFT

(11) **EP 0 813 693 B1**
(45) Veröffentlichungstag und Bekanntmachung des Hinweises auf die Patenterteilung: **02.06.1999**
(21) Anmeldenummer: 96905695.1
(22) Anmeldetag: 07.03.1996
(51) Int. Cl.: G02B 6/255

(54) **SPLEISSEINRICHTUNG ZUM VERSCHWEISSEN VON LICHTWELLENLEITERN**
SPLICING DEVICE FOR WELDING OPTICAL FIBRES
DISPOSITIF A EPISSER PERMETTANT DE SOUDER DES FIBRES OPTIQUES

(30) Priorität: 07.03.1995 DE 19507885
(43) Veröffentlichungstag der Anmeldung: 29.12.1997
(73) Patentinhaber: SIEMENS AKTIENGESELLSCHAFT, 80333 München (DE)
(72) Erfinder: BRUGGER, Rudolf, D-82178 Puchheim (DE); KRAUSE, Dieter, D-82294 Spielberg (DE)
(86) Internationale Anmeldenummer: DE9600413
(87) Internationale Veröffentlichungsnummer: WO9627811

(56) Entgegenhaltungen:
- EP-A- 0 233 709
- EP-A- 0 321 947
- GB-A- 2 222 467
- US-A- 4 598 974

## Beschreibung

Zum lösbaren Verbinden von Lichtwellenleitern werden Lichtwellenleiter-Stecker verwendet, in deren hohlzylindrische und aus Keramik bestehende Steckerteile die zu koppelnden Glasfasern möglichst zentrisch eingeklebt werden sollen. Dabei ist es bekannt, kurze Glasfaserstücke in die zu koppelnden Endbereiche der Steckerteile bereits vorher einzukleben und die weiterführenden Lichtwellenleiter innerhalb dieser Steckerteile mit Hilfe einer Immersionsflüssigkeit anzukoppeln. Dem Vorteil einer exakten Zentrierung der Glasfasern im Koppelbereich steht hier jedoch der Nachteil einer hohen Dämpfung der Koppelstellen innerhalb der Steckerteile gegenüber. Außerdem besteht die Gefahr des Austrocknens der Immersionsflüssigkeit. Auch da-s Einbringen von Verunreinigungen in den Koppelbereich, läßt sich beim Einschieben der Lichtwellenleiter in die zugeordneten Steckerteile kaum vermeiden.

Die vorstehend erwähnten Nachteile einer Kopplung von Lichtwellenleitern mit Hilfe einer Immerrsionsflüssigkeit können durch Verschweißen der Lichtwellenleiter vermieden werden. Entsprechende Spleißeinrichtungen zum Verschweißen von Lichtwellenleitern, wie sie beispielsweise aus der US-A-5 218 184 bekannt sind, sind jedoch nicht dazu geeignet, in die keramischen Steckerteile eingeklebte Glasfasern in oder dicht an den Steckerteilen an weiterführende Lichtwellenleiter anzukoppeln.

Aus der US-A-4 220 394 ist ein Lichtwellenleiter-Stecker bekannt, dessen hohlzylindrische Steckerteile im Bereich der Stoßstelle zwischen dem eingeklebten Glasfaserstück und dem weiterführenden Lichtwellenleiter vier paarweise einander gegenüberliegende Öffnungen aufweist. Im Bereich dieser Öffnungen können dann die beiden Lichtwellenleiter mit Hilfe eines Mikroschweißbrenners miteinander verschweißt werden. Die als Hohlnadel ausgebildete Düse des Mikroschweißbrenners wird dabei in eine der vier Öffnungen eingeführt, so daß weitere Öffnungen zum Einführen eines Greifers sowie zum Beleuchten und Beobachten der Spleißstelle herangezogen werden können.

Aus der US-A-4 598 974 ist ein weiterer Lichtwellenleiter-Stecker bekannt, dessen hohlzylindrische Steckerteile im Bereich der Stoßstelle zwischen dem eingeklebten Glasfaserstück und dem weiterführenden Lichtwellenleiter eine Spleißkammer aufweisen. In diese Spleißkammer ragen zwei Elektroden, welche durch Zündung eines Lichtbogen das Verschweißen der beiden Lichtwellenleiter bewirken. Bei den beiden Elektroden handelt es sich um integrale Bestandteile der Lichtwellenleiter-Stecker, die auch nach dem Spleißvorgang an den zugeordneten Steckerteilen verbleiben.

Der im Anspruch 1 angegebenen Erfindung liegt das Problem zugrunde, eine Spleißeinrichtung zum Verschweißen von Lichtwellenleitern zu schaffen, mit welchen in die keramischen Steckerteile eingeklebte Glasfasern in oder dicht an den Steckerteilen an weiterführende Lichtwellenleiter angeschweißt werden können. Die Zugänglichkeit der innerhalb der Steckerteile liegenden Spleißstellen kann dabei beispielsweise durch eine entsprechende queraxiale Nut eines Steckerteils gewährleistet sein.

Der Erfindung liegt die Erkenntnis zugrunde, daß bei einem Einschwenken des in einer ersten Aufnahme gehaltenen Steckerteils und der darin eingeklebten Glasfaser zwischen die Schweißelektroden und bei einem axialen Einschieben des in einer zweiten Aufnahme gehaltenen Lichtwellenleiters optimale Bedingungen für die Justierung der miteinander zu verbindenden Lichtwellenleiter und für die Qualität der Schweißung gegeben sind.

Die erfindungsgemäße Spleißeinrichtung kann neben der geschilderten Verwendung als Steckerspleißgerät allgemein auch zum Verschweißen von Lichtwellenleitern in oder dicht an anderen optischen Bauelementen eingesetzt werden.

Vorteilhafte Ausgestaltungen der Erfindung gehen aus den Unteransprüchen hervor.

Ein Ausführungsbeispiel der Erfindung ist in der Zeichnung dargestellt und wird im folgenden näher beschrieben.

Es zeigen
- Figur 1: eine Spleißeinrichtung zum Verschweißen von Lichtwellenleitern in Lichtwellenleiter-Steckern in der Draufsicht,
- Figur 2: die Spleißeinrichtung gemäß Figur 1 in einer ersten Seitenansicht,
- Figur 3: die Spleißeinrichtung gemäß Figur 1 in einer zweiten Seitenansicht,
- Figur 4: einen Querschnitt durch die Spleißeinrichtung gemäß Figur 1 in Hohe der Spleißstelle,
- Figur 5: das Prinzip des Einschwenkens des sich im Lichtwellenleiter-Stecker befindlichen Endes des ersten Lichtwellenleiters zwischen die in Hohe der Spleißstelle angeordneten Elektroden,
- Figur 6: eine teilweise geschnittene Seitenansicht der für den Schwenkvorgang gemäß Figur 5 erforderlichen ersten Aufnahme,
- Figur 7: eine Draufsicht auf die in den Figuren 4 und 5 dargestellte erste Aufnahme,
- Figur 8: eine seitliche Ansicht der Spleißstelle der Spleißeinrichtung gemäß Figur 1 und der in axialer Richtung verstellbaren zweiten Aufnahme für den zweiten Lichtwellenleiter,
- Figur 9: eine Draufsicht auf die zweite Aufnahme gemäß Figur 8, die
- Figuren 10 und 11: ein in die Spleißeinrichtung gemäß Figur 1 integriertes Krimpwerkzeug in der axialen Draufsicht bzw. im Querschnitt, und
- Figur 12: einen Längsschnitt durch den Lichtwellenleiter-Stecker nach dem Verschweißen der Lichtwellenleiter.

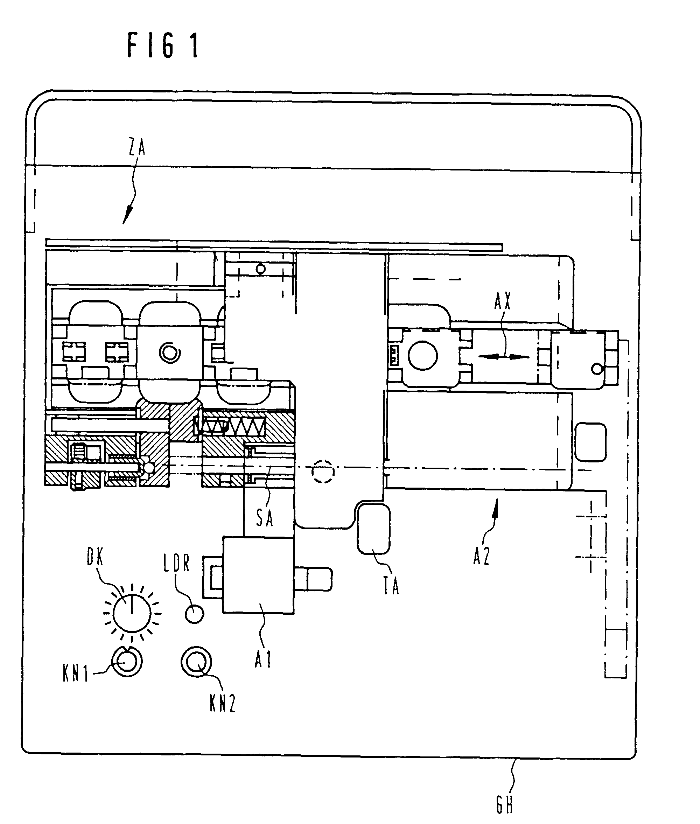

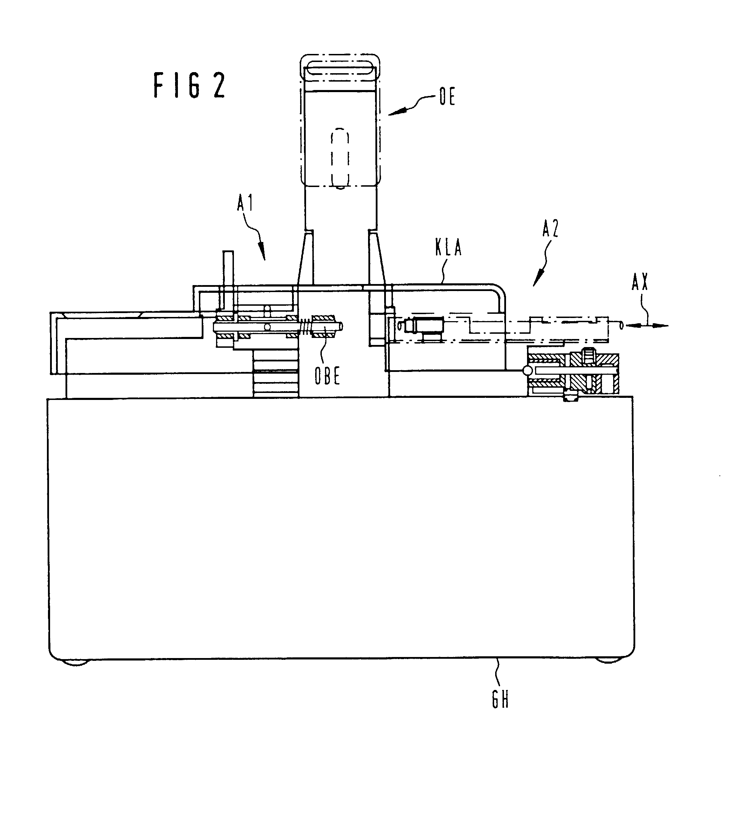

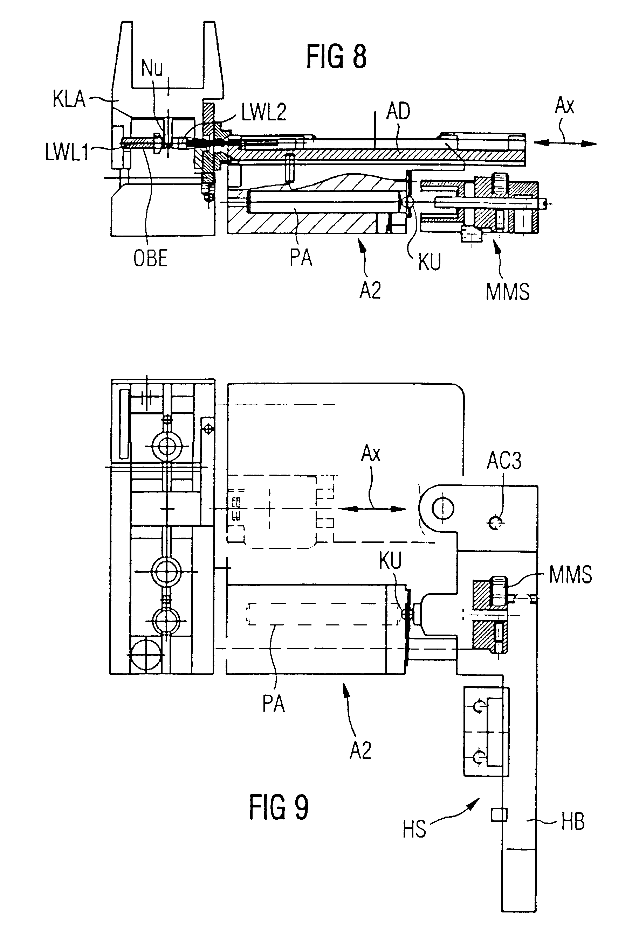

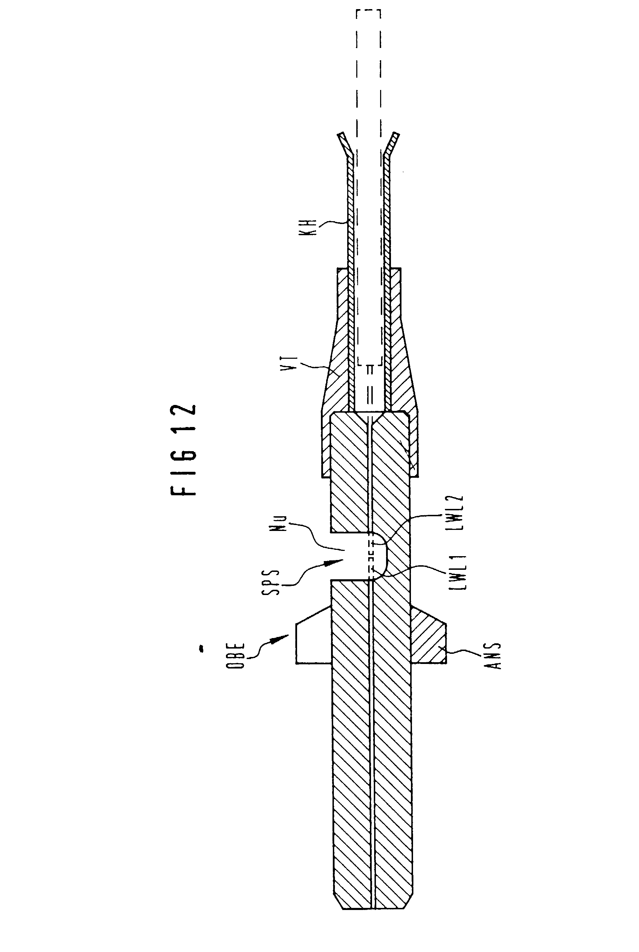

Die Figuren 1 bis 3 zeigen eine Draufsicht und zwei verschiedene Seitenansichten einer Spleißeinrichtung zum Verschweißen von Lichtwellenleitern in optischen Bauelementen, wobei es sich bei den in Figur 2, in Figur 8 und insbesondere in Figur 12 erkennbaren optischen Bauelementen OBE um Lichtwellenleiter-Stecker aus Keramik handelt. In das optische Bauelement OBE ist ein kurzes Stück eines ersten Lichtwellenleiters LWL1 eingeklebt, der im Bereich einer queraxialen Nut NU des optischen Bauelements OBE mit einem zweiten, weiterführenden Lichtwellenleiter LWL2 durch Schweißen verbunden werden soll (vergleiche Figuren 8 und 12).

Zur Halterung des optischen Bauelements OBE und des zugehörigen ersten Lichtwellenleiters LWL1 dient eine erste Aufnahme Al, die um eine mit SA bezeichnete Schwenkachse geschwenkt werden kann. Die in Figur 1 im hochgeschwenkten Zustand dargestellte erste Aufnahme A1 kann um die Schwenkachse SA so nach unten geschwenkt werden, daß das Ende des ersten Lichtwellenleiters LWL1 im Spleißbereich dem Ende des zweiten Lichtwellenleiters LWL2 axial fluchtend gegenüberliegt.

Zur Aufnahme des zweiten Lichtwellenleiters LWL2 dient eine in den Figuren 1 und 2 dargestellte und in axialer Richtung AX verstellbare zweite Aufnahme A2.

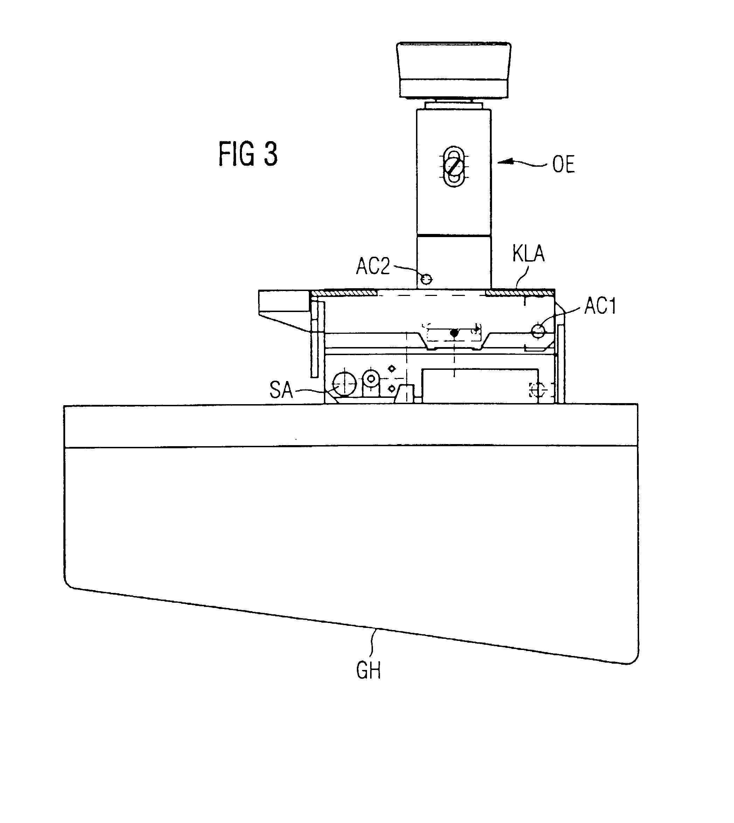

Zum Beobachten der miteinander zu verschweißenden Enden der Lichtwellenleiter LWL1 und LWL2 ist eine in den Figuren 2 und 3 erkennbare optische Einrichtung OE vorgesehen, die auf einer schwenkbaren Klappe KLA angeordnet ist. Die Klappe KLA kann gemäß Figur 3 um eine Achse AC hochgeschwenkt werden. Figur 2 zeigt außerdem, daß die optische Einrichtung OE ihrerseits auf der Klappe KLA um eine Achse AC2 geschwenkt werden kann und dadurch beim Transport der Schweißeinrichtung an die Klappe KLA angelegt werden kann. Die optische Einrichtung OE kann als Mikroskop oder aber auch als eine Abbildungseinrichtung ausgebildet sein, welche den Spleißbereich auf einen Bildschirm abbildet.

Alternativ zu der schwenkbaren ersten Aufnahme Al kann auch eine in Figur 1 mit ZA bezeichnete Zusatzaufnahme für Lichtwellenleiter LWL1 eingesetzt werden, so daß das Spezialgerät auch als normale Spleißeinrichtung zum Verschweißen von Lichtwellenleitern eingesetzt werden kann.

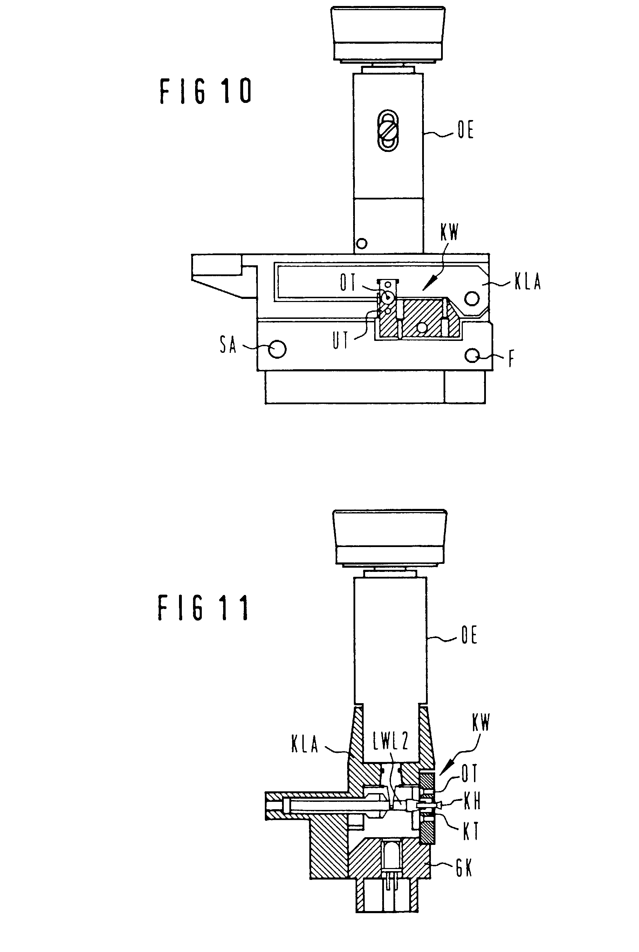

In der Draufsicht gemäß Figur 1 sind außerdem ein erster Knopf KN1 zum Einschalten des Geräts, ein zweiter Knopf KN2 zum Vorschweißen und zum Hauptschweißen, eine rote Leuchtdiode LDR zum Anzeigen des Einschaltzustandes, ein Drehknopf DK zum Einstellen verschiedener Schweißprogramme und eine Taste TA zum Öffnen und Schließen der Klappe KLA und zur Betätigung eines in den Figuren 10 und 11 dargestellten Krimpwerkzeugs KW zu erkennen.

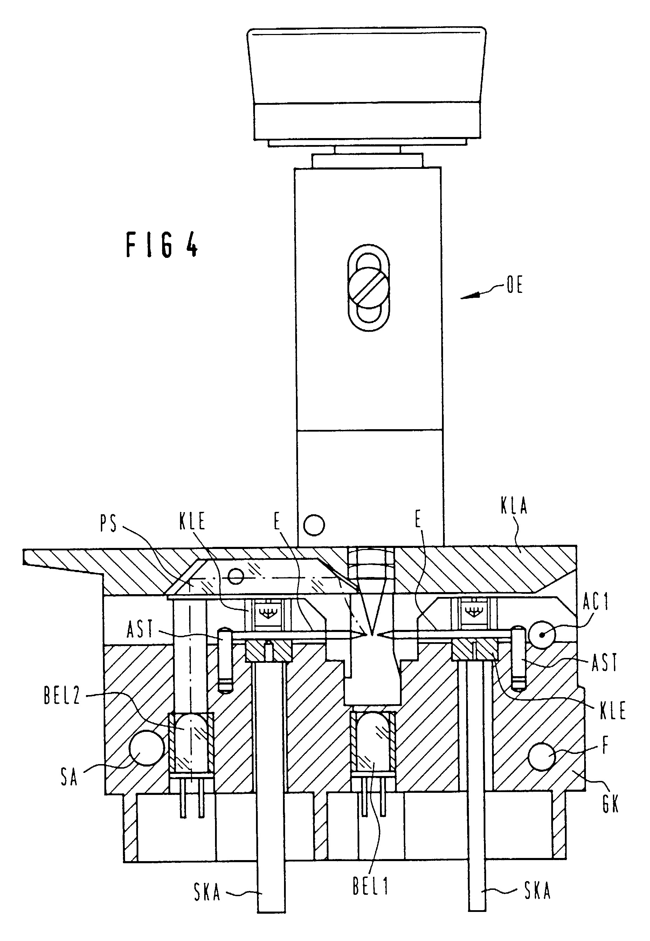

Figur 4 zeigt den eigentlichen Spleißbereich mit zwei im Abstand zueinander angeordneten Elektroden E, welche durch Zündung eines Lichtbogens das Verschweißen der hier nicht näher dargestellten Lichtwellenleiter LWL1 und LWL2 (vergleiche Figur 8) bewirken. Die beiden Elektroden E sind jeweils über Klemmen KLE mit zugeordneten Schweißkabeln SKA für die Zuführung des Schweißstromes verbunden. Zur Einstellung des axialen Abstandes zwischen den beiden Elektroden E sind endseitig angeordnete Anschlagstifte AST vorgesehen.

Auf dem als Elektrodenhalter dienenden Grundkörper GK ist die bereits erwähnte Achse AC1 angeordnet, auf welcher die Klappe KLA mit der optischen Einrichtung OE schwenkbar gelagert ist. In dem aus einem elektrisch isolierenden Kunststoff bestehenden Grundkörper GK sind ferner eine erste Beleuchtungseinrichtung BEL1 zur Durchlichtbeleuchtung der Spleißstelle und eine zweite Beleuchtungseinrichtung BEL2 zur Auflichtbeleuchtung der Spleißstelle angeordnet, wobei beide Beleuchtungseinrichtungen durch Leuchtdioden gebildet sind. Zu der zweiten Beleuchtungseinrichtung BEL2 gehört ein in der Klappe KLA angeordneter Prismenstab PS, welcher das Licht unter einem Winkel von 60° zur horizontalen Richtung auf die Spleißstelle lenkt.

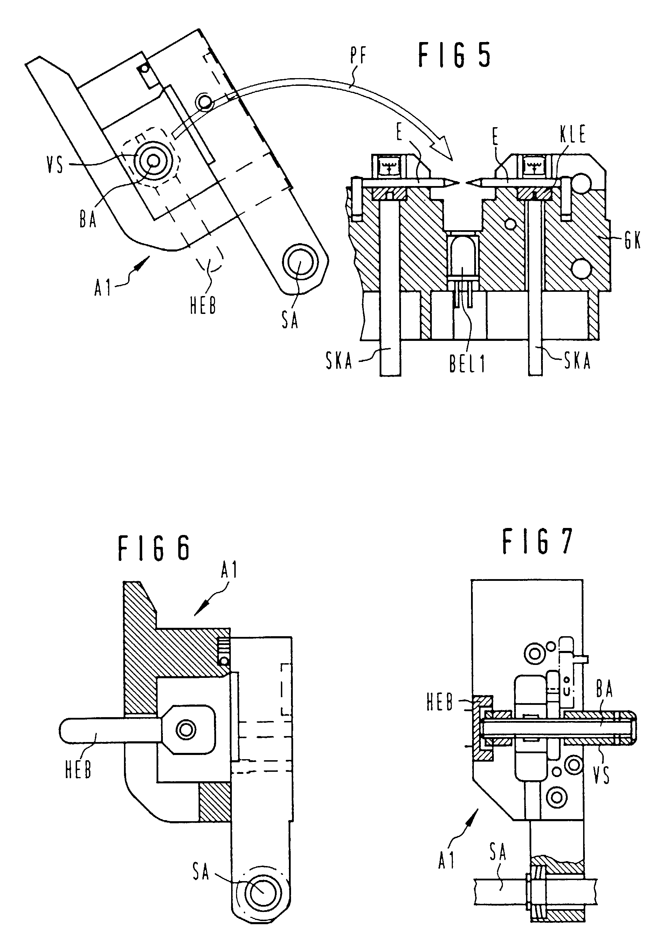

Figur 5 zeigt wie das in der ersten Aufnahme Al drehbar angeordnete optische Bauelement OBE mit dem Ende des ersten Lichtwellenleiters LWL1 durch Schwenken der ersten Aufnahme Al um die Schwenkachse SA in Richtung des Pfeiles PF zwischen die beiden Elektroden E eingebracht wird. Das in Figur 5 nicht dargestellte optische Bauelement OBE wird in eine hohlyzlindrische Bauteilaufnahme BA eingesetzt, welche ihrerseits in einer Verdrehsicherung VS angeordnet ist. Mit Hilfe eines Hebels HEB kann die Bauteilaufnahme BA mit dem optischen Bauelement OBE verdreht werden. Dabei ist in Figur 5 die Schweißstellung des Hebels HEB dargestellt, in welcher die Nut NU des optischen Bauelements OBE fluchtend zu den Elektroden E verläuft.

Figur 6 zeigt eine um 90° verdrehte Stellung des Hebels HEB, in welcher die Nut NU des optischen Bauelements OBE so ausgerichtet ist, daß eine Durchlichtbeleuchtung der Spleißstelle von unten her mit Hilfe der ersten Beleuchtungseinrichtung BEL1 ermöglicht wird.

Figur 7 zeigt eine Draufsicht auf die erste Aufnahme A1 in der in Figur 6 dargestellten Stellung des Hebels HEB.

Die Figuren 8 und 9 zeigen den Aufbau und die Wirkungsweise der in axialer Richtung AX der zu verschweißenden Lichtwellenleiter LWL1 und LWL2 verstellbaren zweiten Aufnahme A2 für den zweiten Lichtwellenleiter LWL2. Die zweite Aufnahme A2 trägt dabei einen auswechselbaren Adapter AD zur Halterung der Faser oder des Kabels des zweiten Lichtwellenleiters LWL2. Zur Grobverstellung der zweiten Aufnahme in axialer Richtung AX und zum Einführen des zweiten Lichtwellenleiters LWL2 in das optische Bauelement OBE dient ein Hebelsystem HS mit einem um eine Achse AC3 schwenkbaren Hebel HB. Die axiale Führung der zweiten Aufnahme A2 erfolgt dabei die Schwenkachse SA und eine parallel dazu verlaufende Führung F, die beide beispielsweise in Figur 4 dargestellt sind. Nach der geschilderten Grobverstellung erfolgt mit Hilfe einer auf dem Hebel HB angeordneten Mikrometerschraube MMS und einer Kugel KU eine axiale Feinverstellung der zweiten Aufnahme A2, mit welcher der axiale Spalt zwischen den beiden Lichtwellenleitern LWL1 und LWL2 innerhalb des optischen Bauelements OBE beispielsweise auf einen Wert von 7 bis 10µm eingestellt wird. Beim eigentlichen Schweißvorgang muß dann der zweite Lichtwellenleiter LWL2 in axialer Richtung AX nachgeschoben werden, wobei diese axiale Zustellbewegung in der zweiten Aufnahme A2 selbsttätig durch einen sich an die Kugel KU anschließenden Piezoantrieb PA vorgenommen wird.

Die Figuren 10 und 11 zeigen ein in die Spleißeinrichtung integriertes Krimpwerkzeug KW für eine mit dem Kabel des zweiten Lichtwellenleiters LWL2 und dem optischen Bauelement OBE zu verbindende Krimphülse KH. Das Unterteil UT des Krimpwerkzeugs KW ist im Grundkörper GK fest angeordnet, während das Oberteil OT in der Klappe KLA angebracht ist. Hierdurch wird nach Betätigung der Taste TA (vgl. Figur 1) beim Schließen der Klappe KLA ein Krimpvorgang ausgelöst.

Figur 12 zeigt einen Längsschnitt durch das als Lichtwellenleiter-Stecker ausgebildete optische Bauelement OBE. Wie bereits im Zusammenhang mit den Figuren 2 und 8 erwähnt wurde, ist in das optische Bauelement OBE ein kurzes Stück des ersten Lichtwellenleiters LWL 1 eingeklebt, das im Bereich der queraxialen Nut NU mit dem zweiten weiterführenden Lichtwellenleiter LWL 2 durch Schweißen verbunden ist. Die Spleißstelle ist mit SPS bezeichnet. Die im Zusammenhang mit Figur 11 bereits erwähnte Krimphülse KH bewirkt über ein aus Stahl bestehendes Verbindungsteil VT eine sichere Verbindung zwischen dem Kabel des zweiten Lichtwellenleiters LWL 2 und dem keramischen Körper des optischen Bauelements OBE. Zur Festlegung des optischen Bauelements OBE in axialer Richtung ist ein ringförmig ausgebildeter Anschlag ANS vorgesehen.

## Patentansprüche

1. Spleißeinrichtung zum Verschweißen von Lichtwellenleitern (LWL1,LWL2) in oder dicht an optischen Bauelementen (OBE), insbesondere Lichtwellenleiter-Steckern, mit
- einer ersten Aufnahme (Al) für das optische Bauelement (OBE) und den zugehörigen ersten Lichtwellenleiter (LWL1),
- einer in axialer Richtung (AX) der zu verschweißenden Lichtwellenleiter (LWL1,LWL2) verstellbaren zweiten Aufnahme (A2) für den zweiten Lichtwellenleiter (LWL2),
- einer optischen Einrichtung (OE) zum Beobachten der zu verschweißenden Enden der Lichtwellenleiter (LWL1,LWL2), und mit
- zwei im Abstand zueinander angeordneten Elektroden (E), welche durch Zündung eines Lichtbogens das Verschweißen der Lichtwellenleiter (LWL1,LWL2) bewirken, wobei
- die erste Aufnahme (Al) um eine parallel zur axialen Richtung (AX) ausgerichtete Schwenkachse (SA) derart schwenkbar gelagert ist, daß das sich in oder dicht an dem optischen Bauelement (OBE) befindlichen Ende des ersten Lichtwellenleiters (LWL1) zwischen die beiden Elektroden (E) einschwenkbar ist.

2. Spleißeinrichtung nach Anspruch 1, bei der
das optische Bauelement (OBE) um die optische Achse des ersten Lichtwellenleiters (LWL1) drehbar in der ersten Aufnahme (Al) gelagert ist.

3. Spleißeinrichtung nach Anspruch 1 oder 2, mit
- einem Hebelsystem (HS) zur Grobverstellung der zweiten Aufnahme (A2) in axialer Richtung (AX), und
- einer Mikrometerschraube (MMS) zur Feinverstellung der zweiten Aufnahme in axialer Richtung (AX).

4. Spleißeinrichtung nach einem der Ansprüche 1 bis 3, mit einem Piezoantrieb (PA) der zweiten Aufnahme (A2) für die in axialer Richtung (AX) wirkende Zustellbewegung des zweiten Lichtwellenleiters (LWL2) beim Schweißvorgang.

5. Spleißeinrichtung nach einem der Ansprüche 1 bis 4, bei der die zweite Aufnahme (A2) einen auswechselbaren Adapter (AD) zur Halterung der Faser oder des Kabels des zweiten Lichtwellenleiters (LWL2) trägt.

6. Spleißeinrichtung nach einem der Ansprüche 1 bis 5, mit einer ersten Aufnahme (A1) für erste Lichtwellenleiter (LWL1) in Form von Fasern oder Kabeln.

7. Spleißeinrichtung nach einem der Ansprüche 1 bis 6, bei der die optische Einrichtung (OE) auf einer schwenkbaren Klappe (KLA) angeordnet ist.

8. Spleißeinrichtung nach Anspruch 7,
die optische Einrichtung (OE) umklappbar auf der Klappe (KLA) angeordnet ist.

9. Spleißeinrichtung nach einem der Ansprüche 1 bis 8, mit einem integrierten Krimpwerkzeug (KW) für mit dem Kabel des zweiten Lichtwellenleiters (LWL2) zu verbindende Krimphülsen (KH).

10. Spleißeinrichtung nach Anspruch 9 in Verbindung mit Anspruch 7 oder 8, bei der das Oberteil (OT) des Krimpwerkzeuges (KW) in der Klappe (KLA) angeordnet ist.

11. Spleißeinrichtung nach einem der Ansprüche 1 bis 10, mit einer ersten Beleuchtungseinrichtung (BEL1) zur Durchlichtbeleuchtung der Spleißstelle.

12. Spleißeinrichtung nach einem der Ansprüche 1 bis 11, mit einer zweiten Beleuchtungseinrichtung (BEL2) zur Auflichtbeleuchtung der Spleißstelle.

## Claims

1. Splicing device for welding optical fibres (LWL1, LWL2) in or close to optical components (OBE), in particular optical fibre plug connectors, having
- a first receptacle (A1) for the optical component (OBE) and the associated first optical fibre (LWL1),
- a second receptacle (A2), which can be adjusted in the axial direction (AX) of the optical fibres (LWL1, LWL2) to be welded, for the second optical fibre (LWL2),
- an optical device (OE) for observing the ends to be welded of the optical fibres (LWL1, LWL2), and having
- two electrodes (E), which are arranged at a distance from each other and effect the welding of the optical fibres (LWL1, LWL2) by igniting an arc,
- the first receptacle (A1) being mounted such that it can pivot about a pivot axis (SA) aligned parallel to the axial direction (AX) in such a way that that end of the first optical fibre (LWL1) that is located in or close to the optical component (OBE) can be pivoted in between the two electrodes (E).

2. Splicing device according to Claim 1, in which the optical component (OBE) is mounted in the first receptacle (A1) such that it can be rotated about the optical axis of the first optical fibre (LWL1).

3. Splicing device according to Claim 1 or 2, having
- a lever system (HS) for the coarse adjustment of the second receptacle (A2) in the axial direction (AX), and
- a micrometer screw (MMS) for fine adjustment of the second receptacle in the axial direction (AX).

4. Splicing device according to one of Claims 1 to 3, having a piezoelectric drive (PA) of the second receptacle (A2) for the delivery movement, acting in the axial direction (AX), of the second optical fibre (LWL2) during the welding operation.

5. Splicing device according to one of Claims 1 to 4, in which the second receptacle (A2) carries an interchangeable adapter (AD) to hold the fibre or the cable of the second optical fibre (LWL2).

6. Splicing device according to one of Claims 1 to 5, having a first receptacle (A1) for first optical fibres (LWL1) in the form of fibres or cables.

7. Splicing device according to one of Claims 1 to 6, in which the optical device (OE) is arranged on a pivotable flap (KLA).

8. Splicing device according to Claim 7, in which the optical device (OE) is arranged on the flap (KLA) such that it can fold over.

9. Splicing device according to one of Claims 1 to 8, having an integrated crimping tool (KW) for crimp sleeves (KH) to be connected to the cable of the second optical fibre (LWL2).

10. Splicing device according to Claim 9 in conjunction with Claim 7 or 8, in which the upper part (OT) of the crimping tool (KW) is arranged in the flap (KLA).

11. Splicing device according to one of Claims 1 to 10, having a first illumination device (BEL1) for transmitted light illumination of the splice point.

12. Splicing devices according to one of Claims 1 to 11, having a second illumination device (BEL2) for incident light illumination of the splice point.

## Revendications

1. Dispositif d'épissage pour souder des guides d'ondes lumineuses (LWL1, LWL2) dans ou tout près de composants optiques (OBE), en particulier de connecteurs de guides d'ondes lumineuses, comprenant
- un premier logement (A1) pour le composant optique (OBE) et le premier guide d'ondes lumineuses (LWL1) associée,
- un deuxième logement (A2) destiné au deuxième guide d'ondes lumineuses (LWL2) et mobile dans la direction axiale (AX) des guides d'ondes lumineuses (LWL1, LWL2) à souder,
- un dispositif optique (OE) pour observer les extrémités à souder des guides d'ondes lumineuses (LWL1, LWL2), et comprenant
- deux électrodes (E) qui sont disposées à distance l'une de l'autre et produisent, par amorçage d'un arc électrique, le soudage des guides d'ondes lumineuses (LWL1, LWL2),
- le premier logement (A1) étant monté pivotant autour d'un axe de pivotement (SA) orienté parallèlement à la direction axiale (AX) de telle sorte que l'extrémité du premier guide d'ondes lumineuses (LWL1) se trouvant dans ou tout près du composant optique (OBE) peut pivoter entre les deux électrodes (E).

2. Dispositif d'épissage selon la revendication 1, dans lequel le composant optique (OBE) est monté tournant dans le premier logement (A1).

3. Dispositif d'épissage selon la revendication 1 ou 2, comportant
- un système à levier (HS) pour le réglage grossier du deuxième logement (A2) dans la direction axiale (AX), et
- une vis micrométrique (MMS) pour le réglage précis du deuxième logement dans la direction axiale (AX).

4. Dispositif d'épissage selon une des revendications 1 à 3, comportant un dispositif d'entraînement piézolectrique (PA) du deuxième logement (A2) pour le mouvement d'avance dans la direction axiale (AX) du deuxième guide d'ondes lumineuses (LWL2) lors de l'opération de soudage.

5. Dispositif d'épissage selon une des revendications 1 à 4, dans lequel le deuxième logement (A2) porte un adaptateur (AD) amovible pour maintenir la fibre ou le câble du deuxième guide d'ondes lumineuses (LWL2).

6. Dispositif d'épissage selon une des revendications 1 à 5, comportant un premier logement (A1) pour des premiers guides d'ondes lumineuses (LWL1) sous forme de fibres ou de câbles.

7. Dispositif d'épissage selon une des revendications 1 à 6, dans lequel le dispositif optique (OE) est monté sur un volet (KLA) pivotant.

8. Dispositif d'épissage selon la revendication 7, dans lequel le dispositif optique (OE) est monté sur le volet (KLA) de manière à pouvoir être rabattu.

9. Dispositif d'épissage selon une des revendications 1 à 8, comportant un outil de sertissage (KW) intégré pour des douilles (KH) de sertissage à raccorder au câble du deuxième guide d'ondes lumineuses (LWL2).

10. Dispositif d'épissage selon la revendication 9 en liaison avec la revendication 7 ou 8, dans lequel la partie supérieure (OT) de l'outil de sertissage (KW) est disposée dans le volet (KLA).

11. Dispositif d'épissage selon une des revendications 1 à 10, comportant un premier dispositif d'éclairage (BEL1) pour éclairer par transmission l'épissure.

12. Dispositif d'épissage selon une des revendications 1 à 11, comportant un deuxième dispositif d'éclairage (BEL2) pour éclairer par réflexion l'épissure.
